# EUROPEAN PATENT SPECIFICATION

(11) **EP 3 813 966 B1**
(45) Date of publication and mention of the grant of the patent: **03.08.2022**
(21) Application number: 19736820.2
(22) Date of filing: 19.06.2019
(51) Int. Cl.: A63G 25/00, B60B 33/00, B60B 33/02

(54) **REAR AXLE OF A DODGEM CAR AND DODGEM CAR COMPRISING SAID REAR AXLE**
HINTERACHSE EINES AUTOSCOOTERS UND AUTOSCOOTER MIT BESAGTER HINTERACHSE
ESSIEU ARRIÈRE D'UNE AUTO-TAMPONNEUSE ET AUTO-TAMPONNEUSE COMPRENANT LEDIT ESSIEU ARRIÈRE

(30) Priority: 27.06.2018 IT 201800006718; 22.11.2018 IT 201800010504
(43) Date of publication of application: 05.05.2021
(73) Proprietor: Bertazzon 3B S.r.l., 31020 Sernaglia (TV) (IT)
(72) Inventor: BERTAZZON, Alessio, 31010 Farra di Soligo (TV) (IT)
(74) Representative: Fabris, Stefano
(86) International application number: PCT/IB2019/055158
(87) International publication number: WO 2020/003062

(56) References cited:
- FR-A- 1 441 527
- GB-A- 492 352
- JP-A- H0 852 278
- US-A- 2 080 029
- US-A- 2 109 041
- US-A- 4 403 673
- US-A1- 2004 201 210
- US-A1- 2010 032 223

## Description

### Technical field

The present invention relates to a rear axle of a dodgem car having the features mentioned in the preamble of the main claim 1.

### Technological background

A rear axle of a dodgem car having the features outlined above is known from GB 492352.

The invention lies in the technical field of dodgem cars that are designed for amusement parks or funfairs. As is known, these cars, which generally have reduced dimensions and are controlled electrically, are intended to circulate on special tracks in which the participants on-board such cars attempt to bump into one another or to avoid intentionally or involuntarily bumping into others. For this purpose, these cars are provided with rubber buffers at the base in order to prevent collisions.

The transmission system of these cars is known to provide that the rear axle is rigid and cannot turn and comprises idler wheels mounted at the opposite ends thereof. As a result of this configuration of the rear axle, the movement of the rear part of the car is above all rigid and controlled during normal operation of the dodgem car. In reality, it would be desirable when driving the car to have a less controlled slipping effect, which can induce a kind of lateral skidding of the rear part of the car, both to the right and to the left, for much greater enjoyment. On the other hand, making the rear axle completely free (by means of each spinning wheel) would instead make the car difficult to manoeuvre when it is moved and parked outside the normal operating practice on the track.

### Description of the invention

The main object of the invention is to provide a rear axle for dodgem cars, the structure and function of which is designed to meet the needs mentioned above by overcoming the constraints described with reference to the known solutions, and in particular which makes it possible to obtain a greater effect of uncontrolled driving, at least during certain stages of the normal operation of the dodgem car, at the same time ensuring easy manoeuvrability of the car, in particular outside the normal operation on the track.

This object and others that will become clearer in the following are achieved by an axle of a dodgem car that is formed in accordance with the attached claims.

### Brief description of the drawings

Further features and advantages of the invention will become clearer from the following detailed description of a few preferred embodiments thereof, which are illustrated by way of non-limiting example, and with reference to the accompanying drawings, in which:
- Fig. 1 is a partially sectional perspective view of a first example of a dodgem car, comprising a rear axle formed in accordance with the present invention,
- Fig. 2 is another partial perspective view of the dodgem car in Fig. 1,
- Fig. 3 is a partial perspective view of a detail of the car in the previous figures,
- Fig. 4 is a plan view of the detail in Fig. 3,
- Fig. 5 and 6 are partially sectional perspective views of the detail in Fig. 3, in which the axle is shown in two separate positions,
- Fig. 7 and 8 are further partial perspective views of the detail in the previous figures,
- Fig. 9 is a partially sectional perspective view of a second example of a dodgem car, comprising a rear axle that is formed in accordance with the present invention,
- Fig. 10 is another partial perspective view of the dodgem car in Fig. 9,
- Fig. 11 is a partial perspective view of a detail of the car in the previous figures,
- Fig. 12 and 13 are partially sectional perspective views of the detail in Fig. 11, in which the axle is shown in two separate positions,
- Fig. 14 and 15 are further partial perspective views of the detail in the previous figures, and
- Fig. 16 and 17 are enlarged perspective views of a detail in the previous figures in separate operating states.

### Preferred embodiments of the invention

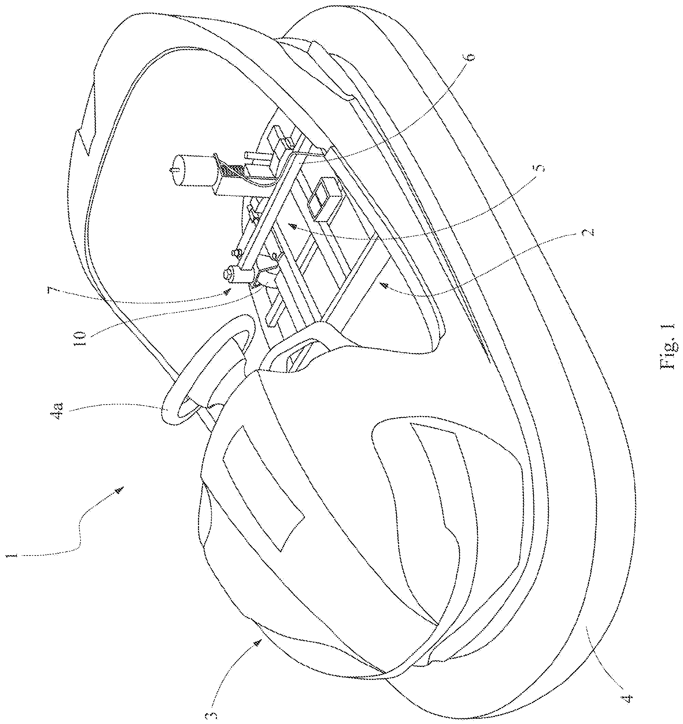

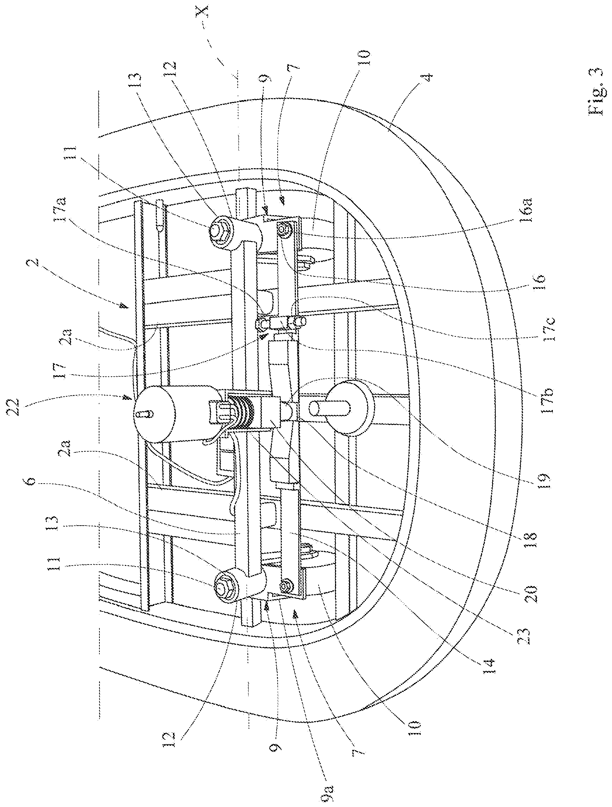

With reference to Fig. 1-8 first of all, 1 indicates a first example of a dodgem car as a whole, which is formed in accordance with the present invention.

The car, only part of which is shown in Fig. 1, comprises a frame 2 on which a chassis 3 is mounted, the perimeter of which is encircled by a rubber buffer 4.

The car also comprises a front steering axle (not shown), which has a structure that is conventional per se and which is controlled by a steering wheel 4a, and a rear axle 5.

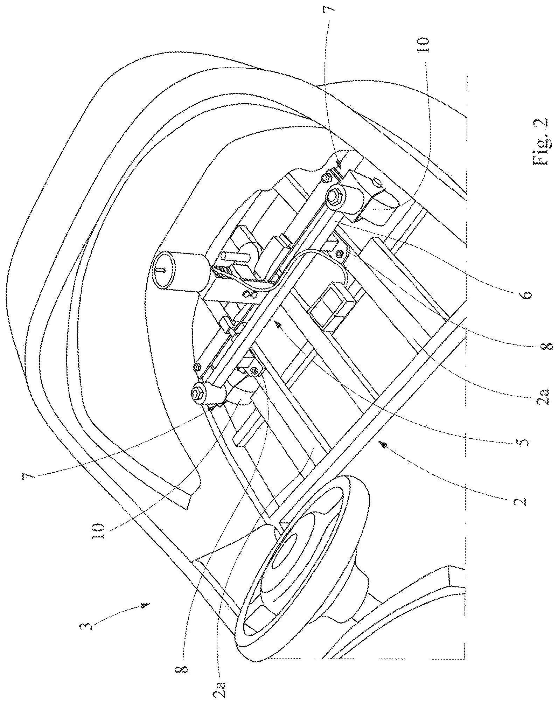

The rear axle 5 comprises a beam 6 having a main longitudinal extension, the direction of which is denoted by X in the figures, which beam is provided with respective wheel groups, both indicated by 7 as a whole, at its opposite axial ends. The beam 6, which suitably has a tubular profile, is integral with the frame 2 by means of a pair of brackets 8, which extend from the beam transversely to the longitudinal direction X and are intended to be anchored, for example by screw-type means, on respective struts 2a of the frame, as is clearly shown in Fig. 2, for example.

On account of their identical structure and function, only one of the wheel groups 7 will be described in detail in the following.

Each wheel group 7 comprises a particular fork 9 for rotatably supporting a wheel 10 that ensures the out-of-control rotation of the wheel about a wheel axis of rotation.

The fork 9 is provided with a pin 11, which extends vertically with respect to the horizontal axis of the wheel (in which the terms "vertical" and "horizontal" are to be considered to refer to the orientation of the wheels relative to the plane in which they rest on the ground) and is rotatably mounted on the beam 6 such that the wheel 10 can spin about the main vertical axis of the pin.

In more detail, the pin 11 is rotatably supported inside a vertical bushing 12 by means of a pair of bearings (not shown in the figures) that are mounted coaxially, which bushing is integral with, for example welded to, the corresponding end of the beam 6.

The pin 11 can be axially held in the bushing 12 by means of a tightening nut 13 that is screwed onto a threaded end portion of said pin.

The forks 9 are secured to one another by a connecting member 14 so as to simultaneously move the forks at the same angle relative to the beam 6.

The connecting member 14 is suitably in the shape of a bar, for example having an elongate rod-shape profile, which is hinged to respective portions 9a of the corresponding forks 9 at its opposite ends by means of a screw 16 that is tightened by a nut 16a (the screw operating as a hinge pin). The preselected configuration is such that the vertical axis of each hinged coupling of the member 14 is parallel to and at a spacing from the vertical spinning axis of the corresponding wheel 10.

In accordance with another feature of the invention, the connecting member 14 can be selectively rigidly locked relative to the beam 6 of the axle so as to selectively prevent the wheels 10 from spinning freely about the relative vertical axis.

With this prerogative, the rear axle 5 can be moved between two main states, a first state in which it is locked and operates as a traditional rigid rear axle, and a second state in which it is free to a limited extent by means of wheels that can spin but are secured so as to simultaneously rotate in the same direction and at the same angle as a result of the member for interconnecting the forks.

Furthermore, as will become clear in the following, the rotary spinning motion afforded to the wheel during the free movement mentioned above is limited to a prefixed arc angle, the extension of which can also be adjusted by means of a limiting means, which is indicated by 17.

Said limiting means comprises a screw-type contact element 17a that is screwed into the through-hole in a bushing 17b that is integral with the connecting member 14. 17c denotes a locknut for locking the screw.

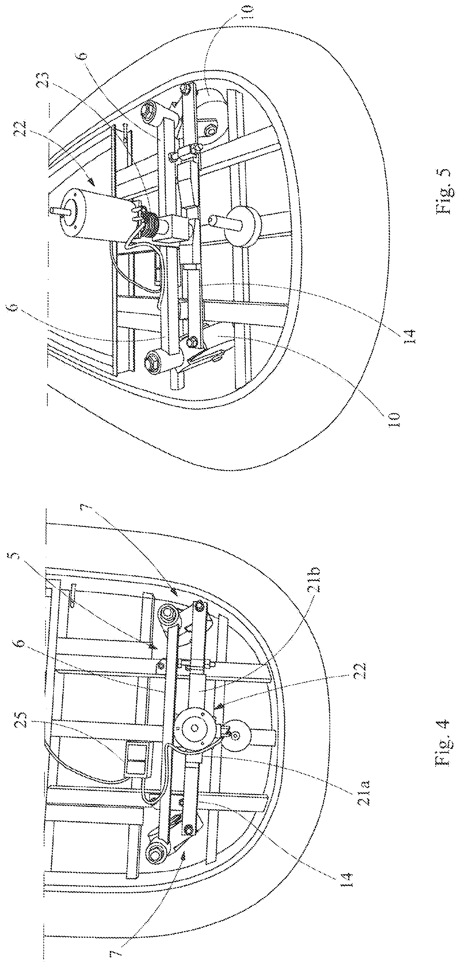

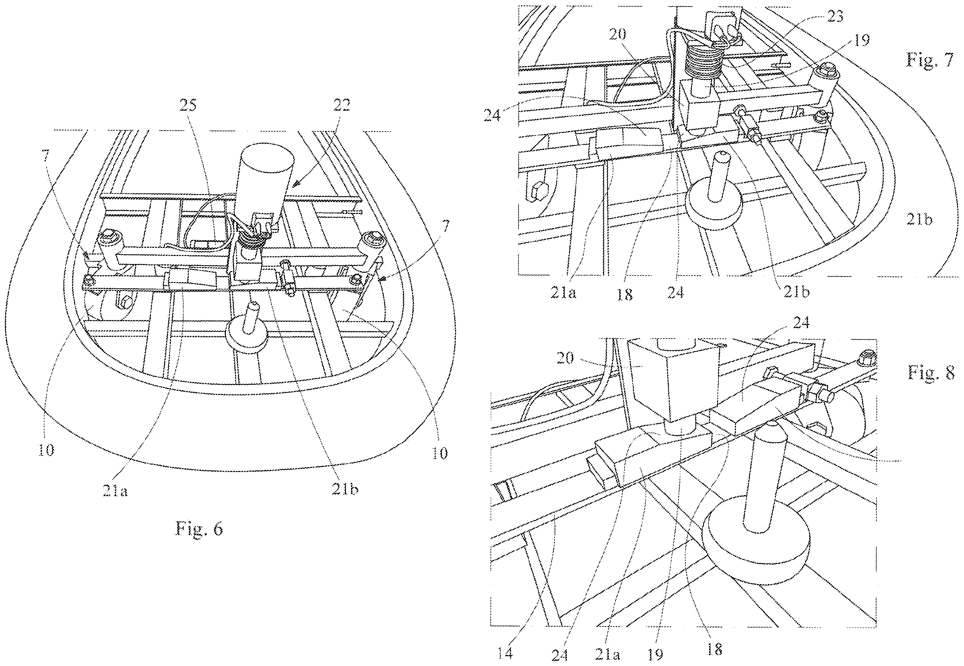

The extent to which the screw 17a is tightened determines the position of the screw head, which operates as an end stop, relative to the beam against which the screw stops during the angular movement of the end stop. In Fig. 5 and 6, the positions, which are opposite one another at an angle, reached by the wheel groups are shown based on the adjustment made to the screw 17a of the end stop of the limiting means.

In order to selectively lock the axle 5, the connecting member 14 comprises a seat 18 in which a locking pin 19 can engage that is slidably held in a guide element 20 (for example in the form of a bushing) that is integral with the beam 6, the locking pin 19 being movable inside the guide element in the vertical sliding direction between a position in which it engages in the seat 18 in order to lock the spinning movement of the wheel groups 7, and a position in which it disengages from the seat 18 in order to allow the wheel groups to move freely in the vertical spinning direction (limited to the angular course permitted by the limiting means).

In more detail, the seat 18 is defined in the centre of the member 14 by a pair of blocks 21a, 21b arranged in a line on the member 14 and secured thereto and facing one another at a predetermined spacing. This spacing and the thickness of the blocks define the dimensions of the seat 18 in which an end portion 19a of the locking pin 19 can engage and can be held when said pin is moved into the locking position.

The pin 19 is also operatively associated with an electromagnetic linear actuator 22, which, when energised, is intended to move the pin 19 such that it disengages from the locking seat 18, in contrast with a suspension 23 that can move the pin 19 back into engagement in the seat 18 when the actuator is electrically deenergised (that is to say by interrupting the power supply to the electromagnets of the actuator). The suspension 23 is suitably formed by a helical spring fitted around the outside of the locking pin 19.

The blocks 21a, 21b are wedge-shaped, at least in the end portions that face one another, the surface profile of which, which is tapered towards the seat 18, is defined by a particular inclined planar surface 24. The pin 19 is brought into surface contact with these surfaces 24 during the return movement actuated by the suspension 23 and these surfaces are inclined so as to facilitate the insertion of the locking pin 19 into the seat 18, during the transition from the state in which said wheel groups spin freely into the state in which the axle is rigidly locked. In Fig. 7 and 8, two separate conditions are shown, in which the locking pin 19 is in relative sliding contact with one or the other of the inclined surfaces 24 of the corresponding wedge-shaped blocks 21a, 21b. 25 denotes a control unit, which is operatively associated with the command by the electromagnetic actuator 22 and by means of which a remote command can be implemented in order to activate or deactivate the electrical supply to the actuator 22.

During operation, when the locking pin 19 is engaged in the seat 18, the spinning movement of the wheels 10 is locked and the axle 5 operates as a traditional rigid rear axle having parallel idler wheels. The movement instead becomes free by means of spinning wheels, as a result of a remote command (for example a radio command) sent by the operator of the ride, who is able to activate and deactivate this movement at their discretion during the race of the dodgem cars. In addition or alternatively, the command by the actuator can also be actuated by the user on-board the car in order to activate or not activate the free movement of the axle. The free movement, by means of wheels 10 that can spin at least to a limited extent, effectively allows the rear part of the dodgem car to skid laterally (both to the right and to the left), thereby giving a "uncontrolled slipping effect", which is suitable for arousing feelings of greater amusement in the occupants of the car.

As indicated previously, the "free" spinning rotation of the wheels 10 is limited by the adjustable end-stop block, which, by stopping against the beams 6 of the axle, limits the movement of the connecting member 14 and therefore the spinning motion of the wheels. The adjustment of the end-stop block also makes it possible to modify the maximum angle of rotation of the wheels should it be necessary to limit or tailor this movement.

The wedge-shaped blocks 21a, 21b have both the function of locking the movement of the connecting member 14 (the movement is a translation composed of the combined movements in the direction that is parallel and perpendicular to the X axis) when the locking pin 19 is engaged in the seat 18 (locked axle), and the function of facilitating the insertion of the pin between the two blocks facing one another when passing from the "free" axle mode to the "locked" axle mode.

It should be noted that the axle system according to the present invention that can spin, at least in part, and can be selectively locked, can be easily implemented on any sized bumper car (for adults, adolescents and children).

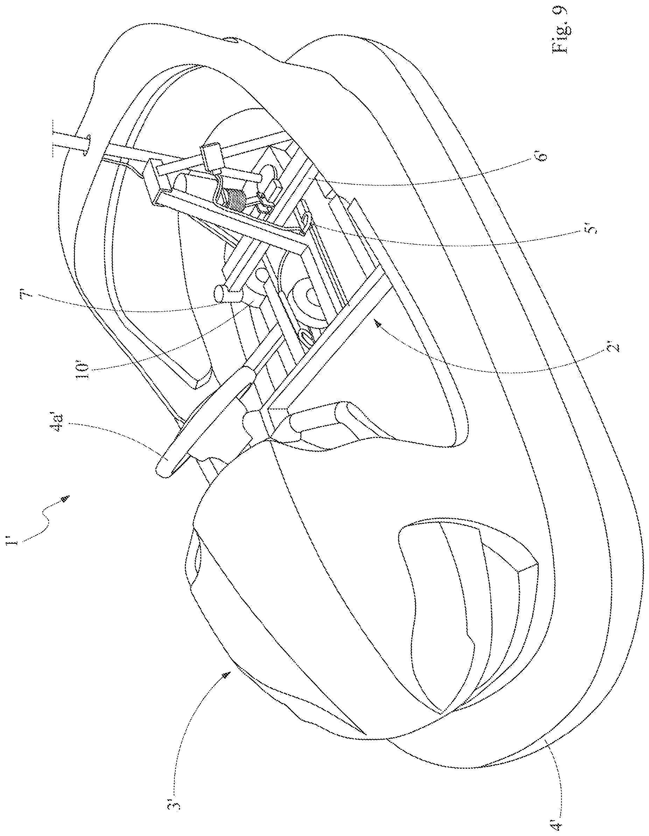

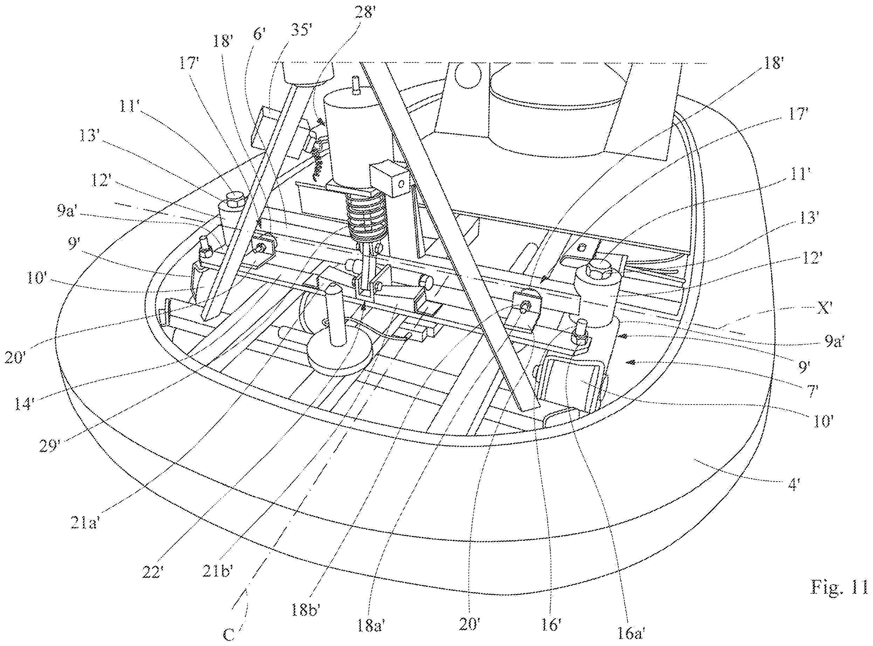

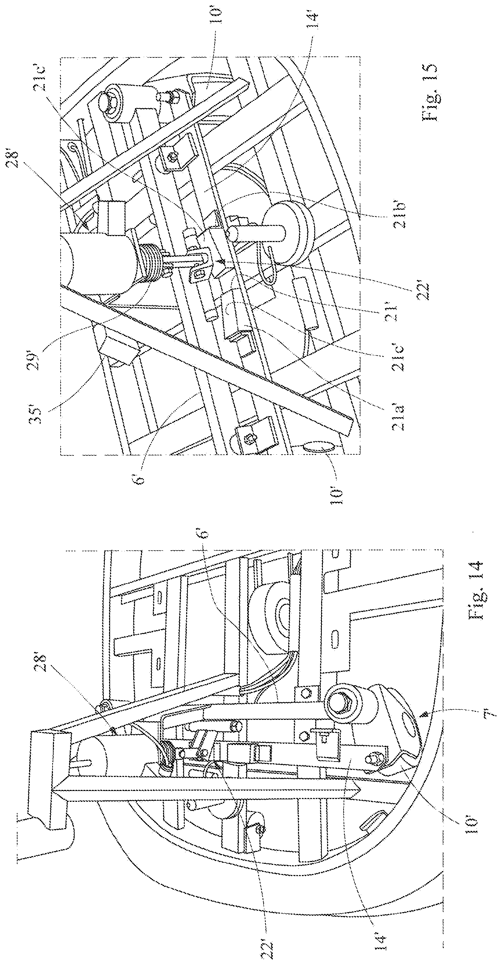

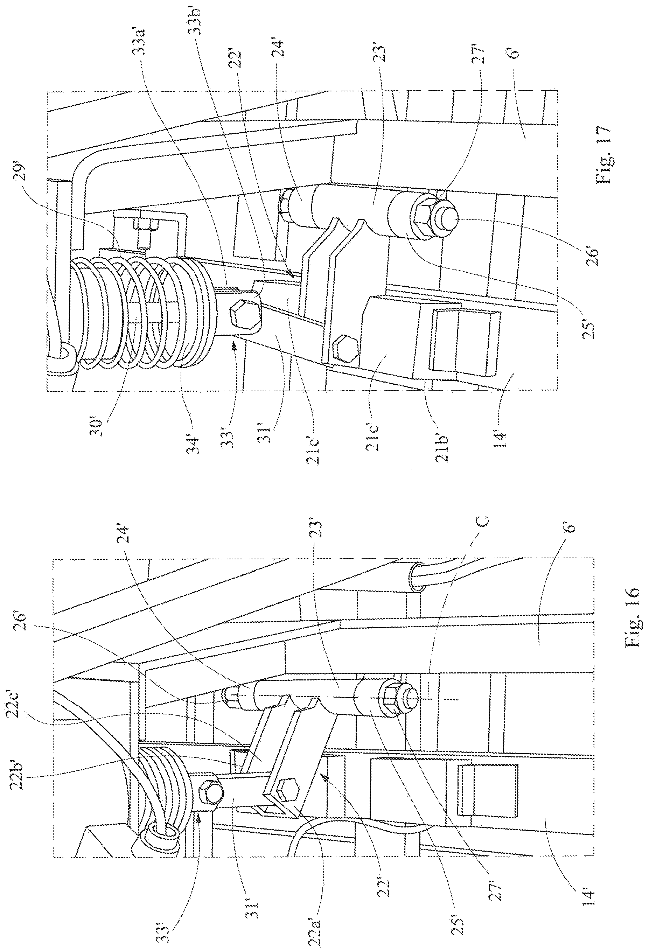

With reference to Fig. 9-17, 1' denotes a second example of a bumper car as a whole, which is formed in accordance with the present invention.

The car 1', which is only shown in part in Fig. 9, comprises a frame 2' on which a chassis 3' is mounted, the perimeter of which is encircled by a rubber buffer 4'. The car also comprises a front steering axle (not shown), which has a structure that is conventional per se and controlled by a steering wheel 4a', and a rear axle 5'.

The rear axle 5' comprises a beam 6' having a main longitudinal extension, the direction of which is denoted by X' in the figures, which beam is provided with respective wheel groups at its opposing axial ends, which groups are both indicated by 7' as a whole.

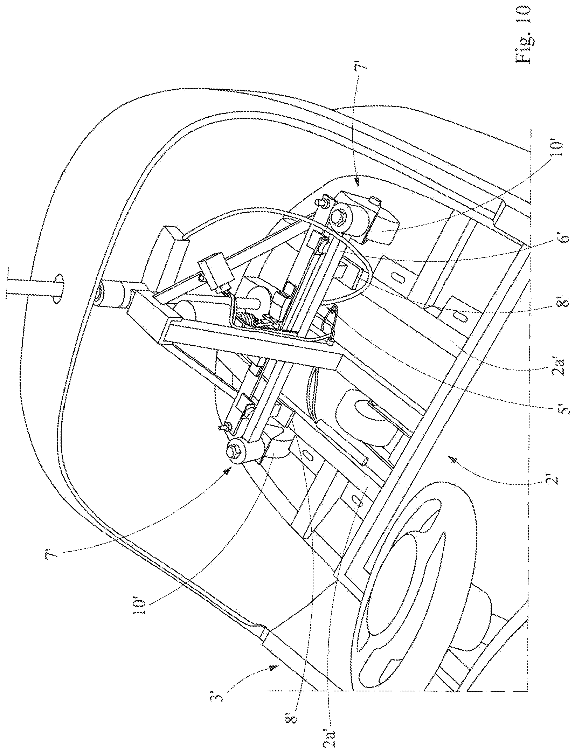

The beam 6', which suitably has a tubular profile, is integral with the frame 2' by means of a pair of brackets 8' that extend from the beam transversely to the longitudinal direction X' and are intended to be anchored, for example by screw-type means, to respective struts 2a' of the frame, as is clearly shown in Fig. 10, for example.

On account of their identical structure and function, only one of the wheel groups 7' will be described in detail in the following.

Each wheel group 7' comprises a particular fork 9' for rotatably supporting a wheel 10' that ensures the out-of-control rotation of the wheel about a wheel axis of rotation.

The fork 9' is provided with a pin 11', which extends vertically with respect to the horizontal axis of the wheel (in which the terms "vertical" and "horizontal" shall be considered to refer to the orientation of the wheels relative to a plane in which they rest on the ground), which pin is rotatably mounted on the beam 6' such that the wheel 10' spins about the main vertical axis of the pin.

In more detail, the pin 11' is rotatably supported inside a vertical bushing 12' by means of a pair of bearings (not shown in the figures) that are coaxially mounted, which bushing is integral with, for example welded to, the corresponding end of the beam 6'.

The pin 11' can be axially held in the bushing 12' by means of a tightening nut 13' that is screwed onto a threaded end portion of said pin.

The forks 9' are secured to one another by means of a connecting member 14' in order to simultaneously move the forks at the same angle relative to the beam 6'. The connecting member 14' is suitably shaped as a bar, for example in the form of an elongate tubular profile, which is hinged to respective portions 9a' of the corresponding forks 9' at its opposing ends by means of a particular screw 16' that is tightened by a nut 16a' (the screw operating as a hinge pin). The preselected configuration is such that the vertical axis of each hinged coupling of the member 14' is parallel to and spaced apart from the vertical spinning axis of the corresponding wheel 10'.

In accordance with another feature of the invention, the connecting member 14' can be selectively locked, in a rigid manner, relative to the beam 6' of the axle so as to selectively prevent the wheels 10' from spinning freely about the relative vertical axis.

With this prerogative, the rear axle 5' can be moved between two main states, a first state in which it is locked and operates as a traditional rigid rear axle, and a second state in which it is free to a limited extent by means of wheels that can spin but are secured so as to simultaneously rotate in the same direction and at the same angle as a result of the member for interconnecting the forks.

Furthermore, as will become clear in the following, the rotary spinning motion afforded to the wheel limited to a prefixed arc angle during the free movement mentioned above, the extension of which can also be adjusted by means of means for limiting the rotation, indicated by 17'.

Said limiting means comprises one or more contact elements 18' (in the example described, a pair of said elements is provided), each of which is provided with a threaded shaft 18a' that is screwed into a threaded hole 19' that is formed as a through-hole in a particular support 20' (for example formed by an angular profile), which is, in turn, integral with the connecting member 14' (for example by means of welding). In one embodiment, the contact element 18' can provide a head for contacting the beam (for example made of rubber or a different material). 18b' denotes a tightening locknut by means of which the threaded shaft 18a' is locked on the support 20' once it has reached the desired adjustment position.

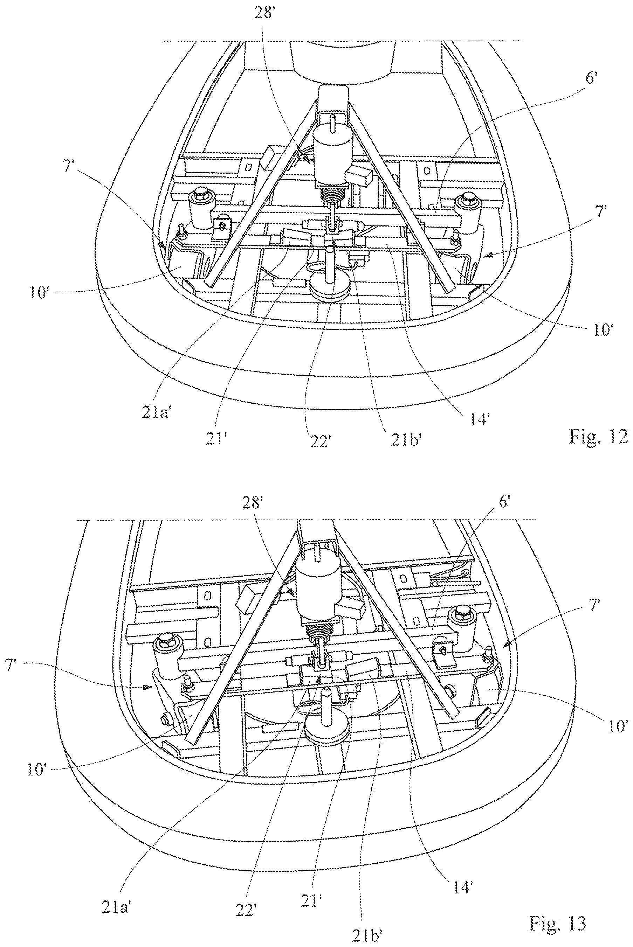

The contact element 18',in particular its head that projects from the connecting element 14', operates as an end-stop means relative to the beam against which said element stops during the angular movement of the end stop. In Fig. 12 and 13, the positions, which are opposite one another at an angle, reached by the wheel groups are shown based on the arrangement of the contact elements of the end stop.

The extent to which the threaded shaft 18a' is tightened determines the position of the head of the contact element 18' relative to the connecting member 14', by means of which the extension of the arc angle relative to the spinning rotation afforded to the wheel when it is moving freely can, however, be adjusted.

In order to selectively lock the axle 5', the connecting member 14' comprises a seat 21' in which a locking element 22' can engage, which comprises one end 22a' that is hinged to the beam 6' about a hinge axis C. Said locking element can consequently oscillate about the hinge axis C between a position in which it is engaged in the seat 21' in order to lock the spinning movement of the wheel groups, and a position in which it is disengaged from the seat 21' in order to allow the wheel groups to move freely in the vertical spinning direction (limited to the angular course permitted by the pair of limiting means).

In more detail, the seat 21' is defined in the centre of the member 14' by a pair of blocks 21a', 21b' that are arranged in a line on the member 14' and connected thereto and face one another at a predetermined spacing. This spacing and the thickness of the blocks define the dimensions of the seat 21' in which the end 22a' of the locking element 22' can engage and can be held when said locking element is moved into the locking position.

In one embodiment, the locking element 22' is shaped having a U profile, the opposite lateral wings 22b', 22c' of which remain resting against the respective blocks 21a', 21b' when the element 22' is moved into the locking position in order to engage in the seat 21'.

On the side opposite the end 22a', the element 22' is provided with a tubular portion 23' that can be interposed between a pair of tubular portions 24', 25' that are integral with the beam 6' so as to be coaxially aligned with respect to one another(axially aligned in parallel with the X' direction). A screw 26' comprising a relative tightening nut 27' is axially held in the portions 23', 24', 25' in order to form the hinge pin, by means of which the locking element 22' is hinged to the beam about the hinge axis C.

The locking element 22' is also operatively associated with an electromagnetic linear actuator 28' that acts on the locking element in order to control the oscillatory movement thereof about the hinge axis C.

In other words, when energised the actuator 28' is intended to rotate the element 22' in order to disengage it from the locking seat 21', in contrast to a suspension 29' that moves the element 22' back into engagement in the seat 21' when the actuator is no longer energised (that is to say by interrupting the power supply to the electromagnets of the actuator).

The suspension 29' is suitably formed by a helical spring fitted around the outside of a cylindrical body of the actuator.

In more detail, the linear actuator 28' comprises a stem 30' for controlling the linear movement, and a connecting rod body 31' is interposed between said stem 30' and the locking element 22', which is hinged at its opposing ends to the actuator stem and to the locking element, respectively.

The connecting rod 31' is hinged between the arms 33a', 33b' of a small fork 33', which is in turn integral with the free end of the stem 30' (by means of screwing the threaded free end of the stem into a corresponding threaded hole made in the small fork), by means of one of its ends, and is hinged between the wings 22b', 22c' of the U profile of the element 22', at its end 22a', by means of its opposite end. The hinged couplings of the connecting rod 31' are suitably formed by means of respective hinge screws having a relative tightening nut.

On account of the interposition of the connecting rod body 31', the linear translational movement of the stem 30' of the actuator can be effectively converted into an angular rotary movement of the locking element 22' (about the hinge axis). 34' denotes a disc for contacting one end of the suspension 29', said disc being provided in the centre of a threaded through-hole that can receive the threaded end of the stem 30' of the actuator by means of screwing so as to secure the disc to the stem, said stem in turn being screwed to the small fork 33'.

The blocks 21a', 21b'are wedge-shaped, at least in the end portions that face one another, the surface profile of which, which is tapered towards the seat 21', is defined by a corresponding inclined planar surface 21c'. The element 22' is brought into surface contact with these surfaces 21c' during the return movement actuated by the suspension 29' and the inclination of these surfaces facilitates the insertion of the locking element 22' into the seat 21' during the transition from the state in which said wheel groups spin freely into the state in which the axle is rigidly locked. In Fig. 12 and 13,two separate conditions are shown, in which the locking element 22' is in relative sliding contact with one or the other of the inclined surfaces 21c' of the corresponding wedge-shaped blocks 21a', 21b'.

35' denotes a control unit, which is operatively associated with the command by the electromagnetic actuator 28', by means of which a remote command can be implemented in order to activate or deactivate the power supply to the actuator. During operation, when the locking element 22' is engaged in the seat 21', the spinning movement of the wheels 10' is locked and the axle 5' operates as a traditional rigid rear axle, having parallel idler wheels. The movement instead becomes free by means of spinning wheels, as a result of a remote command (for example a radio control) sent by the operator of the ride, who can activate and deactivate this movement at their discretion when the dodgem cars are circulating. In addition or alternatively, the command by the actuator can also be activated by the user on-board the car in order to activate or not to activate the free movement of the axle.

The free movement, by means of wheels 10' that can spin at least to a limited extent, effectively allows the rear part of the dodgem car to skid laterally (both to the right and to the left), thereby giving an "uncontrolled slipping effect", which is suitable for arousing feelings of greater amusement in the occupants of the car.

As indicated previously, the "free" spinning rotation of the wheels 10' is limited by the end-stop block of each of the contact elements 18', which end-stop block limits the movement of the connecting member 14' and therefore the spinning motion of the wheels by stopping against the beam 6' of the axle.

By means of the adjustment to the end-stop block, it is possible to modify the maximum angle of rotation of the wheels should it be necessary to limit or tailor this movement.

The wedge-shaped blocks 21a', 21b' have both the function of locking the movement of the connecting member 14' (the movement is a translation composed of the combined movements in the direction that is parallel and perpendicular to the X' axis) when the locking element 22' is engaged in the seat 21' (locked axle), and the function of facilitating the insertion of the element 22' between the two blocks that face one another when passing from the "free" axle mode to the "locked" axle mode.

The invention therefore achieves the objects proposed, thereby bringing about the advantages mentioned above with respect to the known solutions.

## Claims

1. Rear axle (5; 5') of a dodgem car, comprising a beam (6, 6') that mainly extends in a longitudinal direction (X; X') and is provided with respective wheel groups (7; 7') at opposing axial ends, **characterised in that** each wheel group (7; 7') comprises a fork (9; 9') for rotatably supporting the corresponding wheel (10; 10'), said fork (9; 9') bearing a pin (11; 11') that is rotatably mounted on the beam (6; 6') such that the wheel (10; 10') spins in a vertical direction, **in that** said forks (9; 9') are secured to one another by a connecting member (14; 14') so as to simultaneously move the forks (9; 9') at the same angle relative to the beam (6; 6'), and **in that** said connecting member (14; 14') can be selectively locked relative to the beam of the axle so as to selectively prevent the wheels (10; 10') from spinning freely in the vertical direction.

2. Axle according to claim 1, wherein said connecting member (14) comprises a seat (18) in which a locking pin (19) can engage that is slidably received in a guide element (20) that is integral with the beam (6), it being possible to move said locking pin (19) in the sliding direction in the guide element between a position in which it engages in said seat (18) so as to lock the spinning movement of the wheel groups (7), and a position in which it disengages from said seat (18) in order to allow the free movement of the wheel groups (7)in the vertical direction.

3. Axle according to either claim 1 or claim 2, comprising a means (17) for limiting the angular rotation of the wheel groups (7) during the spinning movement in the vertical direction.

4. Axle according to claim 3, wherein said limiting means comprises an adjustable end-stop contact element, which element is provided on the connecting member (14) and is intended to stop against the beam (6) during the spinning movement of the wheel groups (7).

5. Axle according to claim 4, wherein the contact element comprises a screw (17a) that is engaged in a threaded hole made in the connecting member (14).

6. Axle according to claim 5, wherein said threaded hole is formed as a through-hole in a bush (17b) that is integral with the connecting member (14).

7. Axle according to claim 2, wherein said locking pin (19) is operatively associated with an electromagnetic actuator (22) which, when energised, moves the locking pin (19) such that it disengages from the seat (18),in contrast with a suspension (23) that moves the locking pin (19) back into engagement in the seat (18) when the actuator (22) is de-energised.

8. Axle according to claim 7, wherein a remote command is provided for activating or deactivating the power supply to said electromagnetic actuator (22).

9. Axle according to claim 2, wherein said seat (18) in which the locking pin (19) engages is defined by a pair of wedge-shaped blocks (21a, 21b) that are arranged in a line on the connecting member (14) and face one another at a predetermined spacing and have a thickness such that an end region of the locking pin (19) is held between said blocks when the pin (19) is moved into the locking position.

10. Axle according to claim 9, wherein each block (21a, 21b) has a surface profile that is tapered towards the seat (18), the profile being defined by an inclined planar surface (24) that facilitates the insertion of the locking pin (19) into the seat (18) during the transition from the state in which said wheel groups spin freely to the state in which movement of this kind is locked.

11. Axle according to claim 1, wherein said connecting member (14') comprises a seat (21') in which a locking element (22') can engage, which element comprises an end (22a') that is hinged to the beam (6') about a hinge axis (C), it being possible for said locking element (22') to oscillate about said hinge axis (C) between a position in which it engages in said seat (21') so as to lock the spinning movement of the wheel groups (7'), and a position in which it disengages from said seat (21') in order to allow the wheel groups (7') to move freely in the vertical direction.

12. Axle according to claim 11, comprising an electromagnetic linear actuator (28') that acts on said locking element (22') in order to control the oscillatory movement thereof about said hinge axis (C).

13. Axle according to claim 12, wherein said linear actuator (28') comprises a stem (30') for controlling the linear movement, a connecting rod body (31') being arranged between said stem (30') and said locking element (22'), the opposing ends of said connecting rod body (31') being hinged to the actuator stem (30') and to the locking element (22'), respectively.

14. Axle according to claim 13, wherein said connecting rod body (31') is hinged to a free end of the stem (30') and to the end of the locking element (22') that is opposite the end hinged to the beam (6').

15. Axle according to claims 11 and 12, wherein, when energised, said electromagnetic linear actuator (28') is designed to rotate said locking element (22') in order to disengage it from the seat (21'), in contrast with a suspension (29') that moves the locking element (22') back into engagement in the seat (21') when the actuator (28') is not energised.

16. Axle according to any of claims 11 to 15, comprising means for limiting the angular rotation of the wheel groups (7') during the spinning movement in the vertical direction.

17. Axle according to claim 16, wherein said limiting means comprise at least one adjustable end-stop contact element (18'), which element is provided on the connecting member (14') and is intended to stop against the beam (6') during the spinning movement of the wheel groups (7').

18. Axle according to claim 17, wherein the contact element (18') comprises a threaded shaft (18a') that is screwed onto a support (20') that is integral with said connecting member (14').

19. Axle according to claim 12, wherein a remote command is provided for activating or deactivating the power supply to said electromagnetic actuator (28').

20. Axle according to one or more of claims 11 to 19, wherein said seat (21') in which the locking element (22') engages is defined by a pair of wedge-shaped blocks (21a', 21b') that are arranged in a line on the connecting member (14') and face one another at a predetermined spacing and have a thickness such that an end region of the locking element (22') is held between said blocks when said element is moved into the locking position.

21. Axle according to claim 20, wherein each block (21a', 21b') has a surface profile that is tapered towards the seat (21'), the profile being defined by an inclined planar surface (21c') that facilitates the insertion of the locking element (22') into said seat (21') during the transition from the state in which said wheel groups spin freely to the state in which movement of this kind is locked.

22. Dodgem car comprising a rear axle (5; 5') according to one or more of the preceding claims.

## Patentansprüche

1. Hinterachse (5; 5') eines Autoscooters mit einem Träger (6, 6'), der sich hauptsächlich in eine Längsrichtung (X; X') erstreckt und mit jeweiligen Radgruppen (7; 7') an gegenüberliegenden axialen Enden versehen ist, **dadurch gekennzeichnet, dass** jede Radgruppe (7; 7') eine Gabel (9; 9') zum drehbaren Abstützen des entsprechenden Rades (10; 10') aufweist, wobei die Gabel (9; 9') einen Stift (11; 11') trägt, der drehbar auf dem Träger (6; 6') montiert ist, so dass sich das Rad (10; 10') in eine vertikale Richtung dreht, dadurch, dass die Gabeln (9; 9') durch ein Verbindungselement (14; 14') aneinander befestigt sind, um die Gabeln (9; 9') gleichzeitig im gleichen Winkel relativ zum Träger (6; 6) zu bewegen, und dadurch, dass das Verbindungselement (14; 14') relativ zum Träger selektiv verriegelt werden kann, um selektiv zu verhindern, dass sich die Räder (10; 10') in vertikaler Richtung frei drehen.

2. Achse nach Anspruch 1, wobei das Verbindungselement (14) einen Sitz (18) aufweist, in den ein Verriegelungsstift (19) eingreifen kann, der verschiebbar in einem Führungselement (20) aufgenommen ist, das einstückig mit dem Träger (6) ist, wobei der Verriegelungsstift (19) in die Gleitrichtung im Führungselement zwischen einer Position, in der er in den Sitz (18) eingreift, um die Drehbewegung der Radgruppen (7) zu blockieren, und einer Position bewegt werden kann, in der er aus dem Sitz (18) ausrückt, um die freie Bewegung der Radgruppen (7) in vertikaler Richtung zu ermöglichen.

3. Achse nach Anspruch 1 oder Anspruch 2, die eine Einrichtung (17) zum Begrenzen der Winkeldrehung der Radgruppen (7) während der Drehbewegung in vertikaler Richtung aufweist.

4. Achse nach Anspruch 3, wobei die Begrenzungseinrichtung ein einstellbares Endanschlag-Kontaktelement aufweist, das auf dem Verbindungselement (14) vorgesehen ist, und dazu bestimmt ist, während der Drehbewegung der Radgruppen (7) gegen den Träger (6) anzuhalten.

5. Achse nach Anspruch 4, wobei das Kontaktelement eine Schraube (17a) aufweist, die in ein Gewindeloch eingreift, das im Verbindungselement (14) ausgebildet ist.

6. Achse nach Anspruch 5, wobei das Gewindeloch als Durchgangsloch in einer Buchse (17b) ausgebildet ist, die einstückig mit dem Verbindungselement (14) ist.

7. Achse nach Anspruch 2, wobei der Verriegelungsstift (19) funktionsmäßig einem elektromagnetischen Aktuator (22) zugeordnet ist, der bei Erregung den Verriegelungsstift (19) bewegt, so dass er aus dem Sitz (18) ausrückt, im Gegensatz zu einer Aufhängung (23), die den Verriegelungsstift (19) zurück in den Sitz (18) bewegt, wenn der Aktuator (22) stromlos ist.

8. Achse nach Anspruch 7, wobei ein Fernsteuerbefehl zum Aktivieren oder Deaktivieren der Energiezufuhr zum elektromagnetischen Aktuator (22) vorgesehen ist.

9. Achse nach Anspruch 2, wobei der Sitz (18), in den der Verriegelungsstift (19) eingreift, durch ein Paar keilförmiger Blöcke (21a, 21b) ausgebildet ist, die in einer Linie auf dem Verbindungselement (14) angeordnet sind und in einem vorbestimmten Abstand einander zugewandt sind und eine Dicke aufweisen, so dass ein Endbereich des Verriegelungsstifts (19) zwischen den Blöcken gehalten wird, wenn der Stift (19) in die Verriegelungsposition bewegt wird.

10. Achse nach Anspruch 9, wobei jeder Block (21a, 21b) ein Oberflächenprofil aufweist, das sich zum Sitz (18) hin verjüngt, wobei das Profil durch eine geneigte ebene Oberfläche (24) ausgebildet ist, die das Einführen des Verriegelungsstifts (19) in den Sitz (18) beim Übergang von dem Zustand, in dem sich die Radgruppen frei drehen, zu dem Zustand ermöglicht, in dem eine derartige Bewegung blockiert ist.

11. Achse nach Anspruch 1, wobei das Verbindungselement (14') einen Sitz (21') aufweist, in den ein Verriegelungselement (22') eingreifen kann, wobei das Element ein Ende (22a') aufweist, das um eine Gelenkachse (C) am Träger (6') angelenkt ist, wobei es möglich ist, dass das Verriegelungselement (22') um die Gelenkachse (C) zwischen einer Position, in der es in den Sitz (21') eingreift, um die Drehbewegung der Radgruppen (7') zu blockieren, und einer Position zu schwingen, in der es aus dem Sitz (21') ausrückt, um den Radgruppen (7') eine freie Bewegung in vertikaler Richtung zu ermöglichen.

12. Achse nach Anspruch 11, die einen elektromagnetischen Linearaktuator (28') aufweist, der auf das Verriegelungselement (22') wirkt, um dessen schwingende Bewegung um die Gelenkachse (C) zu steuern.

13. Achse nach Anspruch 12, wobei der Linearaktuator (28') einen Schaft (30') zum Steuern der Linearbewegung aufweist, wobei ein Verbindungsstangenkörper (31') zwischen dem Schaft (30') und dem Verriegelungselement (22') angeordnet ist, wobei die gegenüberliegenden Enden des Verbindungstangenkörpers (31') am Aktuatorschaft (30') bzw. am Verriegelungselement (22') angelenkt sind.

14. Achse nach Anspruch 13, wobei der Verbindungsstangenkörper (31') an einem freien Ende des Schafts (30') und am Ende des Verriegelungselements (22') angelenkt ist, das dem am Träger (6') angelenkten Ende gegenüberliegt.

15. Achse nach den Ansprüchen 11 und 12, wobei bei Erregung der elektromagnetische Linearaktuator (28') ausgelegt ist, um das Verriegelungselement (22') zu drehen, um es aus dem Sitz (21') auszurücken, im Gegensatz zu einer Aufhängung (29'), die das Verriegelungselement (22') zurück in einen Eingriff mit dem Sitz (21') bewegt, wenn der Aktuator (28') stromlos ist.

16. Achse nach einem der Ansprüche 11 bis 15, die eine Einrichtung zum Begrenzen der Winkeldrehung der Radgruppen (7') während der Drehbewegung in vertikaler Richtung aufweist.

17. Achse nach Anspruch 16, wobei die Begrenzungseinrichtung zumindest ein einstellbares Endanschlag-Kontaktelement (18') aufweist, wobei das Element auf dem Verbindungselement (14') vorgesehen ist und dazu bestimmt ist, während der Drehbewegung der Radgruppen (7') gegen den Träger (6') anzuhalten.

18. Achse nach Anspruch 17, wobei das Kontaktelement (18') einen Gewindeschaft (18a') aufweist, der auf eine Abstützung (20') geschraubt ist, die einstückig mit dem Verbindungselement (14') ist.

19. Achse nach Anspruch 12, wobei ein Fernsteuerbefehl zum Aktivieren oder Deaktivieren der Energiezufuhr zum elektromagnetischen Aktuator (28') vorgesehen ist.

20. Achse nach einem oder mehreren der Ansprüche 11 bis 19, wobei der Sitz (21'), in den das Verriegelungselement (22') eingreift, durch ein Paar keilförmiger Blöcke (21a', 21b') ausgebildet ist, die in einer Linie auf dem Verbindungselement (14') angeordnet sind und einander in einem vorbestimmten Abstand zugewandt sind und eine Dicke aufweisen, so dass ein Endbereich des Verriegelungselements (22') zwischen den Blöcken gehalten wird, wenn das Element in die Verriegelungsposition bewegt wird.

21. Achse nach Anspruch 20, wobei jeder Block (21a', 21b') ein Oberflächenprofil aufweist, das sich zum Sitz (21') hin verjüngt, wobei das Profil durch eine geneigte ebene Oberfläche (21c') ausgebildet ist, die das Einsetzen des Verriegelungselements (22') in den Sitz (21') während des Übergangs von dem Zustand, in dem sich die Radgruppen frei drehen, zu dem Zustand ermöglicht, in dem eine derartige Bewegung verriegelt ist.

22. Autoscooter mit einer Hinterachse (5; 5') nach einem oder mehreren der vorhergehenden Ansprüche.

## Revendications

1. Essieu arrière (5; 5') d'une auto-tamponneuse, comprenant une poutre (6, 6') qui s'étend principalement dans une direction longitudinale (X; X') et est munie de groupes de roues respectifs (7; 7') à des extrémités axiales opposées, **caractérisé en ce que** chaque groupe de roues (7; 7') comprend une fourche (9; 9') pour supporter à rotation la roue (10; 10') correspondante, ladite fourche (9; 9') portant un pivot (11; 11') qui est monté à rotation sur la poutre (6; 6') de sorte que la roue (10; 10') pivote dans une direction verticale, **en ce que** lesdites fourches (9; 9') sont fixées l'une à l'autre par un organe de liaison (14; 14') de manière à déplacer simultanément les fourches (9; 9') d'un même angle par rapport à la poutre (6; 6'), et **en ce que** ledit organe de liaison (14; 14') peut être bloqué sélectivement par rapport à la poutre de l'essieu de manière à empêcher sélectivement les roues (10; 10') de pivoter librement dans la direction verticale.

2. Essieu selon la revendication 1, dans lequel ledit organe de liaison (14) comprend un siège (18) dans lequel peut s'engager une goupille de blocage (19) qui est reçue à coulissement dans un élément de guidage (20) qui est solidaire de la poutre (6), ladite goupille de blocage (19) pouvant être déplacée dans la direction de coulissement dans l'élément de guidage entre une position dans laquelle elle s'engage dans ledit siège (18) de manière à bloquer le mouvement de pivotement des groupes de roues (7), et une position dans laquelle elle se dégage dudit siège (18) afin de permettre le libre mouvement des groupes de roues (7) dans la direction verticale.

3. Essieu selon la revendication 1 ou la revendication 2, comprenant un moyen (17) pour limiter la rotation angulaire des groupes de roues (7) pendant le mouvement de pivotement dans la direction verticale.

4. Essieu selon la revendication 3, dans lequel ledit moyen de limitation comprend un élément de contact de butée réglable, lequel élément est prévu sur l'organe de liaison (14) et est destiné à venir en butée contre la poutre (6) pendant le mouvement de pivotement des groupes de roues (7).

5. Essieu selon la revendication 4, dans lequel l'élément de contact comprend une vis (17a) qui est engagée dans un trou taraudé ménagé dans l'organe de liaison (14).

6. Essieu selon la revendication 5, dans lequel ledit trou taraudé est réalisé sous la forme d'un trou traversant dans une douille (17b) qui est solidaire de l'organe de liaison (14).

7. Essieu selon la revendication 2, dans lequel ladite goupille de blocage (19) est fonctionnellement associée à un actionneur électromagnétique (22) qui, lorsqu'il est alimenté en énergie, déplace la goupille de blocage (19) de sorte qu'elle se dégage du siège (18), contrairement à une suspension (23) qui ramène la goupille de blocage (19) en engagement dans le siège (18) lorsque l'actionneur (22) n'est pas alimenté en énergie.

8. Essieu selon la revendication 7, dans lequel une commande à distance est prévue pour activer ou désactiver l'apport d'énergie dudit actionneur électromagnétique (22).

9. Essieu selon la revendication 2, dans lequel ledit siège (18) dans lequel la goupille de blocage (19) s'engage est défini par une paire de blocs en forme de coin (21a, 21b) qui sont disposés en ligne sur l'organe de liaison (14) et se font face à un écartement prédéterminé et ont une épaisseur telle qu'une région d'extrémité de la goupille de blocage (19) est maintenue entre lesdits blocs lorsque la goupille (19) est déplacée dans la position de blocage.

10. Essieu selon la revendication 9, dans lequel chaque bloc (21a, 21b) a un profil de surface qui est effilé vers le siège (18), le profil étant défini par une surface plane inclinée (24) qui facilite l'insertion de la goupille de blocage (19) dans le siège (18) pendant le passage de l'état dans lequel lesdits groupes de roues pivotent librement à l'état dans lequel un mouvement de ce type est bloqué.

11. Essieu selon la revendication 1, dans lequel ledit organe de liaison (14') comprend un siège (21') dans lequel peut s'engager un élément de blocage (22'), lequel élément comprend une extrémité (22a') qui est articulée à la poutre (6') autour d'un axe d'articulation (C), ledit élément de blocage (22') pouvant osciller autour dudit axe d'articulation (C) entre une position dans laquelle il s'engage dans ledit siège (21') de manière à bloquer le mouvement de pivotement des groupes de roues (7'), et une position dans laquelle il se dégage dudit siège (21') afin de permettre aux groupes de roues (7') de se déplacer librement dans la direction verticale.

12. Essieu selon la revendication 11, comprenant un actionneur linéaire électromagnétique (28') qui agit sur ledit élément de blocage (22') pour commander son mouvement oscillant autour dudit axe d'articulation (C).

13. Essieu selon la revendication 12, dans lequel ledit actionneur linéaire (28') comprend une tige (30') pour commander le mouvement linéaire, un corps de bielle (31') étant disposé entre ladite tige (30') et ledit élément de blocage (22'), les extrémités opposées dudit corps de bielle (31') étant articulées à la tige d'actionneur (30') et à l'élément de blocage (22'), respectivement.

14. Essieu selon la revendication 13, dans lequel ledit corps de bielle (31') est articulé à une extrémité libre de la tige (30') et à l'extrémité de l'élément de blocage (22') qui est opposée à l'extrémité articulée à la poutre (6').

15. Essieu selon les revendications 11 et 12, dans lequel, lorsqu'il est alimenté en énergie, ledit actionneur linéaire électromagnétique (28') est conçu pour faire tourner ledit élément de blocage (22') afin de le dégager du siège (21'), contrairement à une suspension (29') qui ramène l'élément de blocage (22') en engagement dans le siège (21') lorsque l'actionneur (28') n'est pas alimenté en énergie.

16. Essieu selon l'une quelconque des revendications 11 à 15, comprenant des moyens pour limiter la rotation angulaire des groupes de roues (7') pendant le mouvement de pivotement dans la direction verticale.

17. Essieu selon la revendication 16, dans lequel lesdits moyens de limitation comprennent au moins un élément de contact de butée réglable (18'), lequel élément est prévu sur l'organe de liaison (14') et est destiné à venir en butée contre la poutre (6') pendant le mouvement de pivotement des groupes de roues (7').

18. Essieu selon la revendication 17, dans lequel l'élément de contact (18') comprend une tige filetée (18a') qui est vissée sur un support (20') qui est solidaire dudit organe de liaison (14').

19. Essieu selon la revendication 12, dans lequel une commande à distance est prévue pour activer ou désactiver l'alimentation en énergie dudit actionneur électromagnétique (28').

20. Essieu selon une ou plusieurs des revendications 11 à 19, dans lequel ledit siège (21') dans lequel s'engage l'élément de blocage (22') est défini par une paire de blocs en forme de coin (21a', 21b') qui sont disposés en ligne sur l'organe de liaison (14') et se font face à un espacement prédéterminé et ont une épaisseur telle qu'une région d'extrémité de l'élément de blocage (22') est maintenue entre lesdits blocs lorsque ledit élément est déplacé dans la position de blocage.

21. Essieu selon la revendication 20, dans lequel chaque bloc (21a', 21b') a un profil de surface qui est effilé vers le siège (21'), le profil étant défini par une surface plane inclinée (21c') qui facilite l'insertion de l'élément de blocage (22') dans ledit siège (21') pendant le passage de l'état dans lequel lesdits groupes de roues pivotent librement à l'état dans lequel un mouvement de ce type est bloqué.

22. Auto-tamponneuse comprenant un essieu arrière (5; 5') selon une ou plusieurs des revendications précédentes.
